# EUROPÄISCHE PATENTSCHRIFT

(11) **EP 3 092 401 B1**
(45) Veröffentlichungstag und Bekanntmachung des Hinweises auf die Patenterteilung: **29.08.2018**
(21) Anmeldenummer: 15749786.8
(22) Anmeldetag: 07.08.2015
(51) Int. Cl.: F02M 25/08, B60K 15/03, B60K 15/035, G01M 3/02, G01M 3/26

(54) **VERFAHREN ZUR LECKDIAGNOSE IN EINEM KRAFTSTOFFTANKSYSTEM**
METHOD FOR LEAKAGE DIAGNOSIS IN A FUEL TANK SYSTEM
PROCÉDÉ DE DIAGNOSTIC DES FUITES DANS UN SYSTÈME DE RÉSERVOIR À CARBURANT

(30) Priorität: 28.08.2014 DE 102014217195
(43) Veröffentlichungstag der Anmeldung: 16.11.2016
(73) Patentinhaber: Continental Automotive GmbH, 30165 Hannover (DE)
(72) Erfinder: WEIGL, Manfred, 93161 Sinzing (DE); CHARMPA, Lamproula, 93047 Regensburg (DE); SCHÜLE, Harry, 92431 Neunburg V. Wald (DE)
(86) Internationale Anmeldenummer: PCT/EP2015/068293
(87) Internationale Veröffentlichungsnummer: WO 2016/030173

(56) Entgegenhaltungen:
- EP-A1- 0 611 674
- WO-A1-98/49439
- US-A- 5 146 902
- US-A- 5 881 700
- US-A- 6 123 060
- US-A- 6 148 803
- US-A1- 2004 267 435
- US-B1- 6 283 097

## Beschreibung

Die Erfindung betrifft ein Verfahren zur Leckdiagnose in einem Kraftstofftanksystem eines Verbrennungsmotors eines Kraftfahrzeuges, wobei das Kraftstofftanksystem einen Kraftstofftank und ein Speicherelement zur temporären Speicherung von Kohlenwasserstoffen aufweist, wobei der Kraftstofftank und das Speicherelement derart miteinander verbunden sind, dass die Kohlenwasserstoffe, die aus einem im Kraftstofftank befindlichen Kraftstoff ausgasen, in dem Speicherelement vorübergehend eingespeichert werden, wobei das Speicherelement mit einer Spülluftpumpe entleert werden kann, wobei mit der Spülluftpumpe Frischluft durch eine Frischluftleitung zu dem Speicherelement förderbar ist, wodurch die Kohlenwasserstoffe aus dem Speicherelement ausgelöst und durch eine Kohlenwasserstoff-Luft-Gemisch-Leitung dem Verbrennungsmotor zur Verbrennung zuführt werden können, wobei die Frischluftleitung mit einem ersten Ventil verschließbar ist, und die Kohlenwasserstoff-Luft-Gemisch-Leitung mit einem zweiten Ventil verschließbar ist, und wobei in dem Kraftstofftanksystem ein Drucksensor angeordnet ist.

Zur Verringerung der von Kraftfahrzeugen ausgehenden Schadstoffemissionen wurden in den vergangenen Jahrzehnten zahlreiche Maßnahmen eingeführt. Eine dieser Maßnahmen besteht darin, ein Kraftstofftanksystem einzusetzen, bei dem ein Kraftstofftank mit einem Speicherelement zur temporären Speicherung von Kohlenwasserstoffen verbunden ist. Bei der Betankung von Kraftfahrzeugen mit auf Kohlenwasserstoffen basierenden Kraftstoffen kommt es zum Ausgasen von Kohlenwasserstoffen aus dem Kraftstoff, wobei die Kohlenwasserstoffe nicht in die Atmosphäre gelangen sollen. Auch bei hohen Temperaturen oder Fahrten über unebene Untergründe kommt es verstärkt zu Ausgasungen von Kohlenwasserstoffen aus dem Kraftstoff, wobei effektiv dafür gesorgt werden muss, dass diese Kohlenwasserstoffe nicht in die Atmosphäre entweichen. Insbesondere bei Hybridfahrzeugen, bei denen der Verbrennungsmotor über weite Fahrstrecken vollständig still steht, müssen die ausgegasten Kohlenwasserstoffe effektiv zwischengespeichert werden, um später bei einem erneuten Starten des Verbrennungsmotors verbrannt zu werden. Hierzu haben sich Kraftstofftanksysteme bewährt, die aus einem Kraftstofftank und einem Speicherelement zur temporären Speicherung von Kohlenwasserstoffen bestehen, wobei der Kraftstofftank und das Speicherelement derart miteinander verbunden sind, dass die Kohlenwasserstoffe, die aus einem im Kraftstofftank befindlichen Kraftstoff ausgasen, in dem Speicherelement eingespeichert werden, wobei das Speicherelement mit einer Frischluftleitung verbunden ist, durch die Frischluft zu dem Speicherelement förderbar ist, und das Speicherelement mit einer Kohlenwasserstoff-Luft-Gemisch-Leitung verbunden ist, die das Speicherelement mit einem Ansaugstrang des Verbrennungsmotors verbindet und durch die mit Kohlenwasserstoffen angereicherten Frischluft aus dem Speicherelement zu dem Ansaugstrang förderbar ist. Auf diese Art und Weise kann das Speicherelement zyklisch mit Frischluft gespült werden, und die eingespeicherten Kohlenwasserstoffe können einem Ansaugstrang zugeführt werden, der den Verbrennungsmotor mit dem Luftfilter verbindet und der den Verbrennungsmotor mit Luft zur Verbrennung versorgt. Damit können die aus dem Kraftstofftank ausgegasten Kohlenwasserstoffe in dem Verbrennungsmotor verbrannt werden, und ein Entweichen der Kohlenwasserstoffe in die Atmosphäre wird sicher verhindert. Zur Förderung der Kohlenwasserstoffe aus dem Speicherelement zum Ansaugstrang wird nach dem Stand der Technik eine Spülluftpumpe eingesetzt, die zum Beispiel als Radialpumpe ausgebildet sein kann. Um eine fehlerfreie Funktion des Kraftstofftanksystems zu gewährleisten, ist es notwendig, die Dichtheit des gesamten Kraftstofftanksystems regelmäßig zu überprüfen. Diese Dichtheitsüberprüfung kann nicht auf Werkstattaufenthalte des Kraftfahrzeuges beschränkt werden, sondern die Dichtheits-überprüfung muss im Fahrzeug, also On Board, und regelmäßig im Rahmen der gesamten Lebensdauer des Kraftfahrzeuges erfolgen. Bei der Überprüfung des Fahrzeugtanksystems überlagern sich einige physikalische Effekte, so dass die Leckprüfung eine anspruchsvolle Aufgabe ist. Durch eine Temperaturerhöhung im Kraftstofftank und damit im Kraftstoff, steigt der Dampfdruck der Kohlenwasserstoffe erheblich an. Ebenso kann eine Druckerhöhung im Kraftstofftanksystem durch das Überfahren von sehr unebenem Untergrund und das dadurch hervorgerufene Schütteln des Kraftstoffes ausgelöst werden. Ein Abkühlen des Kraftstoffes hingegen bewirkt einen Druckabfall im Kraftstofftanksystem. All diese Druckschwankungen erfolgen in einem völlig intakten Kraftstofftanksystem allein aufgrund der äußeren Einwirkungen.

Ein Leck im Kraftstofftanksystem ruft in jedem Fall einen Druckabfall hervor, der jedoch von den oben beschriebenen Druckschwankungen überlagert werden kann. Somit ist es sehr schwer, nur mit einem Drucksensor zuverlässige Aussagen über die Leckfreiheit eines Kraftstofftanksystems zu erhalten.

Aus der US 6 148 803 ist ein Leckagediagnosesystem für ein Kraftstoffdampfgasspülsystem bekannt.

Die US 2004/0267435 A1 betrifft ein Kraftstoffgasspülsystem mit einer Fehlerdiagnosefunktion für Brennkraftmaschinen.

Eine Aufgabe der vorliegenden Erfindung ist es daher, ein Verfahren zur Leckdiagnose in einem Kraftstofftanksystem anzugeben, das sichere Aussagen über den Zustand des Kraftstofftanksystems ermöglicht.

Die Aufgabe wird durch ein Verfahren zur Leckdiagnose in einem Kraftstofftanksystem nach dem unabhängigen Vorrichtungsanspruch gelöst.

Dadurch, dass
in einem ersten Verfahrensschritt ein Stillstand des Kraftfahrzeuges abgewartet wird,
in einem zweiten Verfahrensschritt das erste Ventil und das zweite Ventil geschlossen werden,
in einem dritten Verfahrensschritt die Druckveränderung im Kraftstofftanksystem mit dem Drucksensor innerhalb eines vorbestimmten ersten Zeitintervalls gemessen wird,
in einem vierten Verfahrensschritt das erste Ventil oder das zweite Ventil geöffnet wird, und mit der Spülluftpumpe ein Überdruck im Kraftstofftanksystem aufgebaut wird, bis ein vorgegebener Überdruck erreicht ist,
in einem fünften Verfahrensschritt das im vierten Verfahrensschritt geöffnete Ventil wieder geschlossen wird,
in einem sechsten Verfahrensschritt die Druckveränderung im Kraftstofftanksystem mit dem Drucksensor innerhalb eines vorbestimmten zweiten Zeitintervalls gemessen wird, und in einem siebenten Verfahrensschritt die in dem dritten Verfahrensschritt und die in dem sechsten Verfahrensschritt gemessenen Druckveränderungen miteinander verglichen werden, und aus diesem Vergleich die Ergebnisse zur Leckdiagnose abgeleitet werden,
kann eine sehr genaue und sichere Aussage über das Vorhandensein eines Lecks im Kraftstofftanksystem erfolgen.

Bei einer bevorzugten Ausgestaltung der Erfindung gleicht das erste Zeitintervall in seiner zeitlichen Dauer dem zweiten Zeitintervall. Dies macht den Vergleich der gemessenen Druckveränderungen besonders einfach.

Eine vorteilhafte Ausführungsform der Erfindung wird anhand der Figuren beschrieben.
- Figur 1: zeigt einen Verbrennungsmotor mit einem Kraftstofftanksystem,
- Figur 2: zeigt ein Druck-Zeit Diagramm.

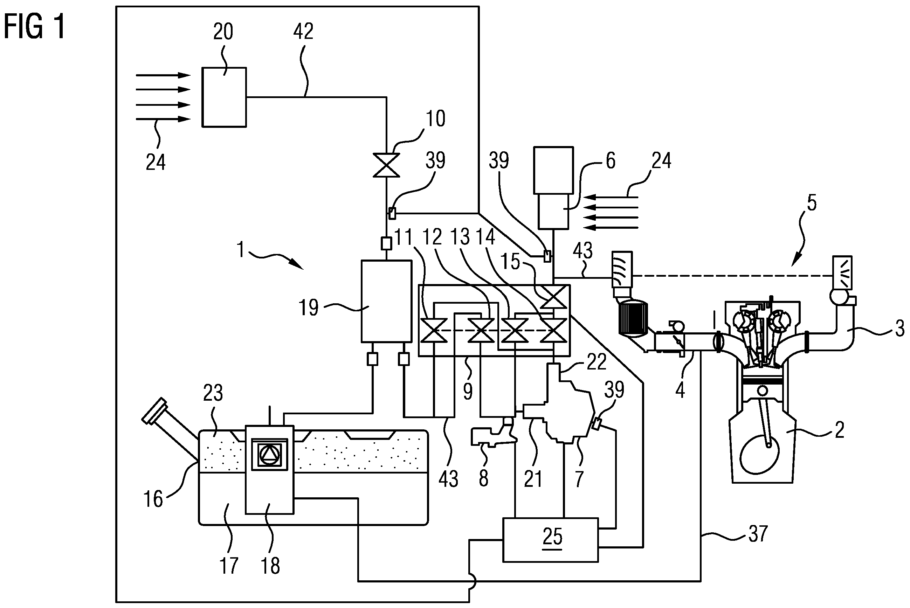

Figur 1 zeigt einen Verbrennungsmotor 2 mit einem Kraftstofftanksystem 1. Der Verbrennungsmotor 2 weist einen Abgasstrang 3 und einen Ansaugstrang 4 auf. Zur Rückgewinnung der im Abgas enthaltenen kinetischen Energie ist der Abgasstrang mit einem Turbolader 5 ausgestattet, der die Ansaugluft im Ansaugstrang 4 komprimieren kann. Der Verbrennungsmotor 2 wird über den Ansaugstrang 4 mit Frischluft 24 versorgt. Ausgehend von der Frischluftseite wird Frischluft 24 über einen Luftfilter 6 in den Ansaugstrang 4 geführt und eventuell mit dem Abgasturbolader 5 oder einem Kompressor verdichtet und dann den Brennkammern des Verbrennungsmotors 2 zugeführt. Darüber hinaus wird dem Verbrennungsmotor 1 Kraftstoff 17 aus dem Kraftstofftank 16 über eine Kraftstoffleitung 37 zugeführt.

Figur 1 zeigt weiterhin das Kraftstofftanksystem 1 mit dem Kraftstofftank 16 und einem Speicherelement 19 zur temporären Speicherung von Kohlenwasserstoffen 23. Der Kraftstofftank 16 und das Speicherelement 19 sind derart miteinander verbunden, dass die Kohlenwasserstoffe 23, die aus einem im Kraftstofftank 16 befindlichen Kraftstoff 17 ausgasen, in dem Speicherelement 19 eingespeichert werden können. Das Speicherelement 19 kann beispielsweise als Aktivkohlespeicher ausgebildet sein. Ein Aktivkohlespeicher ist ein geschlossener Kanister, in dem meist granularer Kohlenstoff derart angeordnet ist, dass sich an dem Kohlenstoff die zu speichernden Kohlenwasserstoffe 23 anlagern. Das Speicherelement 19 hat jedoch nur eine begrenzte Speicherkapazität, so dass das Speicherelement 19 regelmäßig entleert werden muss, indem Frischluft 24 z. B. über einen Spülluftfilter 20 angesaugt wird und über eine Frischluftleitung 42 mithilfe einer Spülluftpumpe 7 in das Speicherelement 19 gesaugt oder gedrückt wird. Die Frischluft 24 durchströmt die Aktivkohle in dem Speicherelement 19 und nimmt dabei Kohlenwasserstoffe 23 auf, wodurch die Kohlenwasserstoffkonzentration in der zugeführten Frischluft 24 erhöht wird und wonach die mit den Kohlenwasserstoffen 23 angereicherte Frischluft 24 entlang einer Kohlenwasserstoff-Luft-Gemisch-Leitung 43 zu dem Ansaugstrang 4 gefördert wird. In dem Ansaugstrang 4 vermischt sich die mit den Kohlenwasserstoffen 23 angereicherte Frischluft 24 mit der Frischluft 24, die über den Luftfilter 6 angesaugt wird. Damit können die Kohlenwasserstoffe 23 dem Verbrennungsmotor 1 zugeführt werden, wo die Kohlenwasserstoffe 23 in den Brennkammern des Verbrennungsmotors 2 verbrannt werden. Da das Kraftstofftanksystem 1 leicht flüchtige Kohlenwasserstoffe 24 beinhaltet, ist es notwendig, die Dichtheit bzw. Leckfreiheit des gesamten Kraftstofftanksystems 1 regelmäßig zu überprüfen. Ein Bestandteil des in Figur 1 gezeigten Kraftstofftanksystems 1 ist die Ventileinheit 9. In diesem Beispiel besteht die Ventileinheit 9 aus einem fünften Ventil 11, einem sechsten Ventil 12, einem dritten Ventil 13, einem vierten Ventil 14 und einem zweiten Ventil 15. Das zweite Ventil 15 dient zusammen mit einem ersten Ventil 10 zur kompletten Abdichtung des Kraftstofftanksystems 1. Wenn also das zweite Ventil 15 und erste Ventil 10 geschlossen sind, und im Kraftstofftanksystem 1 keine Leckage vorhanden ist, wird der im Kraftstofftanksystem 1 nach dem Schließen des zweiten Ventils 15 und des ersten Ventils 10 vorhandene Druck konstant aufrechterhalten, solange keine weiteren äußeren Einflüsse wie Temperaturänderungen oder mechanische Stöße auf das Kraftstofftanksystem 1 hinzukommen. Dieser konstante Druck P kann von dem Drucksensor 8 erfasst und mit dem Steuergerät 25 überwacht werden. Wenn es jedoch zum Beispiel eine Temperaturänderung im Kraftstoff 17, zum Beispiel durch die Abwärme von der Kraftstofffördereinheit 18, gibt, wird sich der Druck P im Kraftstofftanksystem 1 ändern. Diese Druckveränderung im Kraftstofftanksystem (1) wird im Rahmen des dritten Verfahrensschrittes aus Anspruch 1 mit dem Drucksensor (8) innerhalb eines vorbestimmten ersten Zeitintervalls T gemessen, wobei die Messergebnisse zum Beispiel in einem Steuergerät 25 verarbeitet und abgespeichert werden können. In einem vierten Verfahrensschritt wird das zweite Ventil 15 (oder je nachdem, wo die Spülluftpumpe 7 platziert ist, das erste Ventil 10) geöffnet, und mit der Spülluftpumpe 7 ein Überdruck im Kraftstofftanksystem 1 aufgebaut, bis ein vorgegebener Überdruck erreicht ist. Das fünfte Ventil 11, das sechste Ventil 12, das dritte Ventil 13 und das vierte Ventil 14, welche Bestandteile der Ventileinheit 9 sind, dienen dabei dazu, die Förderrichtung der Frischluft 24 umzukehren, wodurch Frischluft 24 von der Spülluftpumpe 7 in den Kraftstofftank 16 förderbar ist. Zum Spülen des Speicherelementes 19 ist das erste Ventil 10 geöffnet, und in der Ventileinheit 9 sind das sechste Ventil 12 und das vierte Ventil 14 sowie das zweite Ventil 15 geöffnet. Das fünfte Ventil 11 in der Ventileinheit 9 und das dritte Ventil 13 in der Ventileinheit 9 sind geschlossen. Wird nun die Spülluftpumpe 7, die als Radialpumpe ausgebildet ist und damit das zu pumpende Medium nur von der Saugseite 21 zur Druckseite 22 fördern kann, betrieben, dann erfolgt eine Frischluftzufuhr vom Spülluftfilter 20 über das erste Ventil 10 durch das Speicherelement 19 hin zum Ansaugstrang 4 des Verbrennungsmotors 2. In dieser Konfiguration wird also das Speicherelement 19, das als Aktivkohlefilter ausgebildet sein kann, mit Frischluft 24 gespült, wobei die im Speicherelement 19 eingelagerten Kohlenwasserstoffe 23 ausgespült werden und dem Verbrennungsmotor 2 zugeführt werden. Wenn das Speicherelement 19 nicht gespült werden muss, weil es zum Beispiel nur wenig mit Kohlenwasserstoffen 23 beladen ist, also eine geringe Kohlenwasserstoffkonzentration im Speicherelement 19 vorliegt, kann das erste Ventil 10 geschlossen werden. Darüber hinaus kann auch das sechste Ventil 12 und das vierte Ventil 14 in der Ventileinheit 9 geschlossen werden. Zunächst bleibt das zweite Ventil 15 geöffnet. Wird nun die Spülluftpumpe 7 betrieben, wird Fristluft 24 über den Luftfilter 6 angesaugt und in Richtung des Speicherelementes 19 und des Kraftstofftanks 17 gepresst. Damit erfolgt eine kontrollierte Druckerhöhung im Kraftstofftanksystem 1. Die Druckerhöhung im Kraftstofftanksystem 1 kann über den Drucksensor 8 und/oder die Drehzahl bzw. Leistungsaufnahme der Spülluftpumpe 7 kontrolliert werden. Sowohl der Drucksensor 8 als auch die Spülluftpumpe 7 sind hierzu mit einem elektronischen Steuergerät 25 verbunden. Auch die Steuerung aller genannten Ventile 10, 11, 12, 13, 14, 15 kann durch das Steuergerät 25 erfolgen, Zudem kann mindestens ein Temperatursensor 39 mit dem Steuergerät 25 verbunden sein. Wenn nun das Kraftstofftanksystem 1 mit einem vorbestimmten Druck beaufschlagt ist, kann das zweite Ventil 15 abgesperrt werden, wodurch der im Kraftstofftanksystem 1 aufgebaute Druck konstant bleibt, solange im Kraftstofftanksystem 1 keine Leckage vorhanden ist. Mit dem hier beschriebenen Kraftstofftanksystem 1 kann während des normalen Betriebes eines Kraftfahrzeuges die Dichtheit des Kraftstofftanksystems 1 regelmäßig überprüft werden, was eine wichtige Anforderung aus den Vorschriften zum Schutz der Umwelt und Atmosphäre ist.

Gemäß dem sechsten Verfahrensschritt des Anspruchs 1 wird die Druckveränderung im Kraftstofftanksystem 1 mit dem Drucksensor 8 innerhalb eines vorbestimmten zweiten Zeitintervalls T gemessen, und in einem siebenten Verfahrensschritt werden die in dem dritten Verfahrensschritt und die in dem sechsten Verfahrensschritt gemessenen Druckveränderungen miteinander verglichen, und aus diesem Vergleich werden die Ergebnisse zur Leckdiagnose abgeleitet.

Mit Hilfe der Temperatursensoren 39, die an verschiedenen Stellen des Kraftstofftanksystems 1 angeordnet sein können, kann ein Zusammenhang zwischen dem von der Radialpumpe 7 erzeugten Druck und der Drehzahl, mit der sie angetrieben wird, bzw. mit der Leistung, die sie aufnimmt, hergestellt werden. Damit kann der erzeugte Überdruck im Kraftstofftanksystem 1 gut vom Steuergerät 25 anhand der Leistungsaufnahme oder der Drehzahl der Radialpumpe 7 kontrolliert werden, und es kann eine qualitativ hochwertige Leckdiagnose erfolgen.

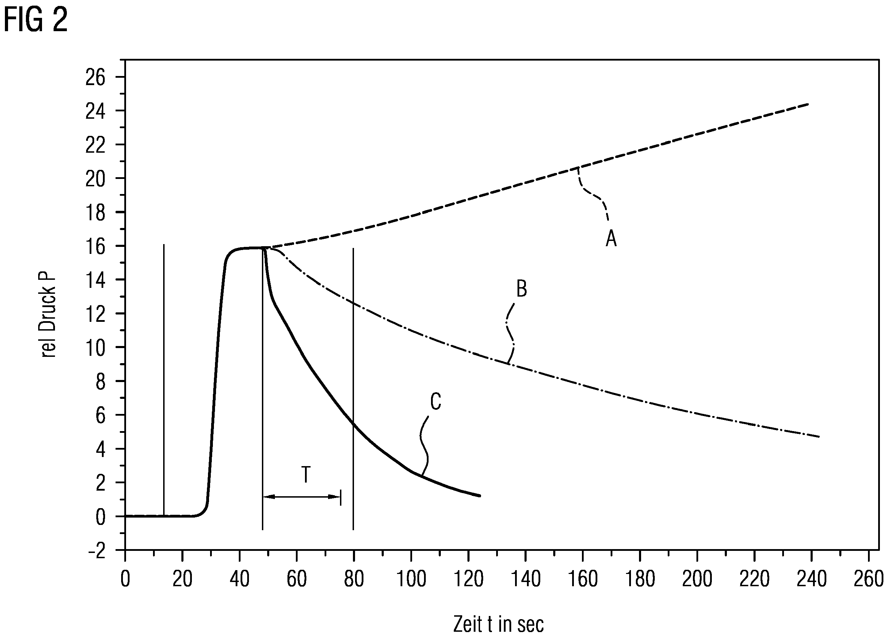

Figur 2 zeigt ein Druck-Zeit-Diagramm. Auf der Ordinate des Koordinatensystems ist der relative Druck P aufgetragen, und auf der Abszisse des Koordinatensystems ist die Zeit t in Sekunden aufgetragen. Die Kurve A zeigt den mit dem Drucksensor 8 gemessen relativen Druck im Kraftstofftanksystem 1. Die Kurve A ist das Messergebnis eines komplett leckfreien Kraftstofftanksystems 1. Beispielsweise erzeugt eine Temperaturerhöhung im Kraftstoff 17, die durch die Abwärme der Kraftstofffördereinheit 18 hervorgerufen sein kann, einen Druckanstieg im hermetisch abgeschlossenen Kraftstofftanksystems 1. Dieser Druckanstieg erfolgt weitgehend linear, was in der Kurve A deutlich zu erkennen ist.

Bei der Kurve B wird ein Druckabfall sichtbar, der, startend von einem Zeitpunkt bei etwa 50 Sekunden, die Form einer fallenden Exponentialfunktion aufweist. Dieses Verhalten deutet auf ein kleines Leck in der Größenordnung von etwa 0,1 bis 0,5 mm Durchmesser im Kraftstofftanksystem 1 hin.

Die Kurve C zeigt ab einem Zeitpunkt von etwa 50 Sekunden einen starken Druckabfall, der ebenfalls negativ exponentiell ausgeprägt ist und auf ein größeres Leck im Kraftstofftanksystem 1 hinweist. Bei einem derart starken Druckabfall existiert im Kraftstofftanksystem 1 ein Leck von mindestens 1 mm Durchmesser.

Da sich in der Realität oft Effekte wie das Vorhandensein eines kleinen Lecks in Kraftstofftanksystem 1 (Kurve B) und ein Druckanstieg durch Abwärme (Kurve A) überlagern, ist es schwer, ein Leck ausschließlich auf der Grundlage einer einzigen Druckmessung zu erkennen. Das erfindungsgemäße Verfahren erlaubt es jedoch, durch die Messung der Druckveränderung im dritten und im sechsten Verfahrensschritt und den darauffolgenden Vergleich der Messergebnisse, also der gewonnene Druck-Zeit-Diagramme, eine sichere Aussage über das Vorhandensein eines Lecks zu erhalten und sogar die Größe des Lecks annähernd zu bestimmen.

## Patentansprüche

1. Verfahren zur Leckdiagnose in einem Kraftstofftanksystem (1) eines Verbrennungsmotors (2) eines Kraftfahrzeuges, wobei das Kraftstofftanksystem (1) einen Kraftstofftank (16) und ein Speicherelement (19) zur temporären Speicherung von Kohlenwasserstoffen (23) aufweist, wobei der Kraftstofftank (16) und das Speicherelement (19) derart miteinander verbunden sind, dass die Kohlenwasserstoffe (23), die aus einem im Kraftstofftank (16) befindlichen Kraftstoff (17) ausgasen, in dem Speicherelement (19) vorübergehend eingespeichert werden, wobei das Speicherelement (19) mit einer Spülluftpumpe (7) entleert werden kann, wobei mit der Spülluftpumpe (7) Frischluft (24) durch eine Frischluftleitung (42) zu dem Speicherelement (19) förderbar ist, wodurch die Kohlenwasserstoffe (23) aus dem Speicherelement (19) ausgelöst und durch eine Kohlenwasserstoff-Luft-Gemisch-Leitung (43) dem Verbrennungsmotor (2) zur Verbrennung zuführt werden können, wobei die Frischluftleitung (42) mit einem ersten Ventil (10) verschließbar ist, und die Kohlenwasserstoff-Luft-Gemisch-Leitung (43) mit einem zweiten Ventil (15) verschließbar ist, und wobei in dem Kraftstofftanksystem (1) ein Drucksensor (8) angeordnet ist, d a **durch gekennzeichnet**, dass
in einem ersten Verfahrensschritt ein Stillstand des Kraftfahrzeuges abgewartet wird,
in einem zweiten Verfahrensschritt das erste Ventil (10) und das zweite Ventil (15) geschlossen werden,
in einem dritten Verfahrensschritt die Druckveränderung im Kraftstofftanksystem (1) mit dem Drucksensor (8) innerhalb eines vorbestimmten ersten Zeitintervalls (T) gemessen wird,
in einem vierten Verfahrensschritt das erste Ventil (10) oder das zweite Ventil (15) geöffnet wird, und mit der Spülluftpumpe (7) ein Überdruck im Kraftstofftanksystem (1) aufgebaut wird, bis ein vorgegebener Überdruck erreicht ist,
in einem fünften Verfahrensschritt das im vierten Verfahrensschritt geöffnete Ventil (10, 15) wieder geschlossen wird,
in einem sechsten Verfahrensschritt die Druckveränderung im Kraftstofftanksystem (1) mit dem Drucksensor (8) innerhalb eines vorbestimmten zweiten Zeitintervalls (T) gemessen wird, und
in einem siebenten Verfahrensschritt die in dem dritten Verfahrensschritt und die in dem sechsten Verfahrensschritt gemessenen Druckveränderungen miteinander verglichen werden, und aus diesem Vergleich die Ergebnisse zur Leckdiagnose abgeleitet werden.

2. Verfahren zur Leckdiagnose nach Anspruch 1, **dadurch gekennzeichnet , dass** das erste Zeitintervall in seiner zeitlichen Dauer dem zweiten Zeitintervall gleicht.

## Claims

1. Method for leakage diagnosis in a fuel tank system (1) of an internal combustion engine (2) of a motor vehicle, wherein the fuel tank system (1) has a fuel tank (16) and a storage element (19) for the temporary storage of hydrocarbons (23), wherein the fuel tank (16) and the storage element (19) are connected to one another in such a way that the hydrocarbons (23) which outgas from a fuel (17) which is situated in the fuel tank (16) are stored temporarily in the storage element (19), wherein the storage element (19) can be emptied by means of a purge air pump (7), wherein fresh air (24) can be conveyed by means of the purge air pump (7) through a fresh air line (42) to the storage element (19), as a result of which the hydrocarbons (23) can be released from the storage element (19) and can be fed through a hydrocarbon/air mixture line (43) to the internal combustion engine (2) for combustion, wherein the fresh air line (42) can be closed by means of a first valve (10), and the hydrocarbon/air mixture line (43) can be closed by means of a second valve (15), and wherein a pressure sensor (8) is arranged in the fuel tank system (1), **characterized in that**
a stationary period of the motor vehicle is waited for in a first method step,
the first valve (10) and the second valve (15) are closed in a second method step,
the pressure change in the fuel tank system (1) is measured by means of the pressure sensor (8) within a predefined first time interval (T) in a third method step, the first valve (10) or the second valve (15) is opened, and an excess pressure is built up in the fuel tank system (1) by means of the purge air pump (7) until a predefined excess pressure is reached in a fourth method step,
the valve (10, 15) which was opened in the fourth method step is closed again in a fifth method step,
the pressure change in the fuel tank system (1) is measured by means of the pressure sensor (8) within a predefined second time interval (T) in a sixth method step, and
the pressure changes which were measured in the third method step and in the sixth method step are compared with one another, and the results are derived from said comparison for leakage diagnosis, in a seventh method step.

2. Method for leakage diagnosis according to Claim 1, **characterized in that** the duration of the first time interval is equal to that of the second time interval.

## Revendications

1. Procédé de diagnostic des fuites dans un système de réservoir à carburant (1) d'un moteur à combustion interne (2) d'un véhicule automobile, le système de réservoir à carburant (1) possédant un réservoir à carburant (16) et un élément de stockage (19) destiné à stocker temporairement des hydrocarbures (23), le réservoir à carburant (16) et l'élément de stockage (19) étant reliés l'un à l'autre de telle sorte que les hydrocarbures (23) qui sont produits par dégagement gazeux depuis un carburant (17) qui se trouve dans le réservoir à carburant (16) sont temporairement stockés dans l'élément de stockage (19), l'élément de stockage (19) pouvant être vidé avec une pompe à air de rinçage (7), de l'air frais (24) pouvant être transporté vers l'élément de stockage (19) avec la pompe à air de rinçage (7) à travers une conduite à air frais (42), les hydrocarbures (23) pouvant ainsi être libérés de l'élément de stockage (19) et acheminés au moteur à combustion interne (2) à travers une conduite à mélange hydrocarbure-air (43) en vue de la combustion, la conduite à air frais (42) pouvant être fermée avec une première vanne (10) et la conduite à mélange hydrocarbure-air (43) pouvant être fermée avec une deuxième vanne (15), et un capteur de pression (8) étant disposé dans le système de réservoir à carburant (1), **caractérisé en ce que**
dans une première étape du procédé, un arrêt du véhicule automobile est attendu,
dans une deuxième étape du procédé, la première vanne (10) et la deuxième vanne (15) sont fermées,
dans une troisième étape du procédé, la variation de pression dans le système de réservoir à carburant (1) est mesurée avec le capteur de pression (8) au sein d'un premier intervalle de temps (T) prédéfini,
dans une quatrième étape du procédé, la première vanne (10) ou la deuxième vanne (15) est ouverte et une surpression est établie dans le système de réservoir à carburant (1) avec la pompe à air de rinçage (7) jusqu'à ce qu'une surpression prédéfinie soit atteinte,
dans une cinquième étape du procédé, la vanne (10, 15) ouverte dans la quatrième étape du procédé est de nouveau fermée,
dans une sixième étape du procédé, la variation de pression dans le système de réservoir à carburant (1) est mesurée avec le capteur de pression (8) au sein d'un deuxième intervalle de temps (T) prédéfini,
dans une septième étape du procédé, les variations de pression mesurées à la troisième étape du procédé et à la sixième étape du procédé sont comparées entre elles et les résultats servant au diagnostic des fuites sont dérivés de cette comparaison.

2. Procédé de diagnostic des fuites selon la revendication 1, **caractérisé en ce que** la durée dans le temps du premier intervalle de temps est égale à celle du deuxième intervalle de temps.
